# EUROPÄISCHE PATENTSCHRIFT

(11) **EP 1 784 877 B1**
(45) Veröffentlichungstag und Bekanntmachung des Hinweises auf die Patenterteilung: **10.12.2008**
(21) Anmeldenummer: 05769576.9
(22) Anmeldetag: 23.07.2005
(51) Int. Cl.: H01M 4/86, H01M 4/88, H01M 4/92, H01M 8/10, H01M 8/02

(54) **EIN TEXTILES GEWEBE FÜR EINE BRENNSTOFFZELLE SOWIE DESSEN HERSTELLUNG UND VERWENDUNG**
A TEXTILE MATERIAL FOR A FUEL CELL, PRODUCTION AND USE THEREOF
UN TISSU TEXTILE POUR UNE PILE A COMBUSTIBLE, SA FABRICATION ET UTILISATION

(30) Priorität: 02.09.2004 DE 102004042406
(43) Veröffentlichungstag der Anmeldung: 16.05.2007
(73) Patentinhaber: Forschungszentrum Jülich GmbH, 52425 Jülich (DE)
(72) Erfinder: SCHLUMBOHM, Carola, 52074 Aachen (DE); KALKREUTH, Denise, 52428 Jülich (DE)
(86) Internationale Anmeldenummer: PCT/DE2005/001300
(87) Internationale Veröffentlichungsnummer: WO 2006/026940

(56) Entgegenhaltungen:
- EP-A- 0 089 830
- EP-A- 1 298 745
- WO-A-92/02301
- DE-C1- 19 539 257
- US-A- 4 313 998
- US-A- 6 087 549
- US-A1- 2004 096 607
- US-B1- 6 444 339

## Beschreibung

Die Erfindung betrifft Fasern, aus denen Textilien hergestellt werden können, insbesondere Textilien, die in Brennstoffzellen eingesetzt werden.

### Stand der Technik

Die Hauptkomponenten einer PEM (Polymer-Elektrolyt-Membran) Brennstoffzelle sind die Membranelektrode und die strukturierten Trennplatten, welche teilweise die Funktionen zum Verteiler der Betriebsstoffe und Ableiten des Stroms übernehmen. Die Membranelektrode umfasst in der Regel eine feste Polymer-Elektrolyt-Membran in Form einer Ionenaustauschermembran, auf der üblicherweise auf beiden Seiten zunächst eine Katalysatorschicht, eine Gasdiffusionsschicht (GDL) und eine Stromsammelschicht angeordnet sind. Die Katalysatorschicht weist in der Regel eine Mischung aus Katalysator und Ruß auf, wobei unter Ruß allgemein Kohlenstoffpartikel verstanden werden, die aus unterschiedlichen Prozessen gewonnen werden können und dadurch bedingt unterschiedliche Oberflächeneigenschaften aufweisen. Gegebenenfalls kann die Gasdiffusionsschicht auch gleichzeitig die Funktion des Stromsammlers mit übernehmen.

Bei der Herstellung einer Brennstoffzelle wird üblicherweise eine entsprechende Membran mit Katalysator beschichtet oder eine Katalysatorschicht aufgebracht, und anschließend die Gasdiffusionsschichten darauf angeordnet. Alternativ werden die Katalysatorschichten auf die Gasdiffusionsschicht aufgetragen und anschließend mit der Membran verpresst.

Als Material für Gasdiffusionsschichten wird sehr oft Papier oder Gewebe eingesetzt, welche aus kohlenstoffhaltigem Material bestehen. Durch die richtungsabhängigen Eigenschaften des Kohlenstoffs unterscheiden sich die elektrischen Leitfähigkeiten in der Papier- bzw. Gewebeebene und senkrecht dazu. Typischerweise ist die elektrische Leitfähigkeit in der Ebene größer als senkrecht dazu. Papiere besitzen in der Regel eine hohe Steifigkeit. Daher sind sie bruchempfindlicher als die Gewebe, die wesentlich flexibler sind. So werden die Papiere beim Beschichten bzw. Zusammenbau zu einer Zelle oder aber während des Betriebes häufig derart beansprucht, dass sie brechen und damit die elektrische Leitfähigkeit der Gasdiffusionsschicht reduzieren.

Die vorgenannten Nachteile konnten mit dem Einsatz textiler, z. B. gewebter, kohlenstoffhaltiger Fasern überwunden werden. Durch die unterschiedlichen Webarten lassen sich unterschiedlich flexible, jedoch stabile Gewebe herstellen. Elastische Eigenschaften liegen für Gewebe, im Gegensatz zum Papier, in allen Richtungen vor. Sie ermöglichen die Diffusion und das Weiterleiten der Brennstoffe (z. B. Methanol, Wasserstoff, Luft, Sauerstoff) zum Katalysator und erlauben den Abtransport der vorwiegend gasförmigen Reaktionsprodukte, die in der Katalysatorschicht entstehen.

Aus EP 0 869 568 A1 ist eine Brennstoffzelle bekannt, bei der eine Gasdiffusionsschicht eingesetzt wird, die aus einem kohlenstoffhaltigen Gewebe besteht, auf dessen Oberfläche eine Beschichtung aus einer Mischung aus Fluororesin und Ruß aufgebracht ist. Diese Beschichtung, die benachbart zu einer auf der Polymer-Elektrolyt-Membran aufgebrachten Katalysatorschicht angeordnet ist, verhindert regelmäßig, dass diese durch das während des Betriebs erzeugte Wasser geflutet wird.

In US 2003/0209428 A1 wird eine Gasdiffusionsschicht aus einem kohlenstoffhaltigen, gewebten, textilen Gewebe beschrieben, welche eine hohe elektrische Leitfähigkeit aufweist. Dieses Gewebe ist aus sehr dünnen Kohlenstofffasern aufgebaut, weist einen Faseranteil von weniger als 60 %, ein Gewicht von 50 bis 150 g/m², eine Dicke von 0,05 bis 0,33 mm und einen Widerstand von weniger als 0,1 Ω auf. Das Gewebe zeigt vorteilhaft eine für den Einsatz in einer Brennstoffzelle geeignete Steifigkeit.

Aus EP 1 298 745 A2 ist eine Schicht aus kohlenstoffhaltigem Gewebe aus unterschiedlich dicken Fäden bekannt. Die Schicht weist auf der zur Katalysatorschicht ausgerichteten Seite eine feine Maschenweite und auf der anderen Seite eine gröbere Maschenweite auf. Das Gewebe wird in einer flüssigen Dispersion aus PTFE (Polytetrafluorethylen) getränkt, so dass es Wasser abweisend wird. Ferner wird eine Gasdiffusionsschicht beschrieben, bei der auf der Oberfläche einer Gewebeschicht mit einer feineren Maschenweite eine elektrisch leitende, Polymer aufweisende Schicht aus dispergiertem Kohlenstoff und PTFE hergestellt wird. In einem Ausführungsbeispiel weist die Gasdiffusionsschicht zwei verschiedene Arten von Kohlenstoffpartikeln auf, die jeweils einen unterschiedlichen Anteil an Säuregruppen zeigen. Durch Variation des Anteils an diesen beiden Kohlenstoffpartikeln (Ruß) innerhalb der Gasdiffusionsschicht vom Gaseinlass zum Gasauslass hin, kann die Wasserdurchlässigkeit der Schicht entlang des Gasflusses eingestellt werden.

Der gleiche Effekt kann auch durch eine Gasdiffusionsschicht erzeugt werden, bei der zwei verschiedene Polymermaterialien eingesetzt werden, die jeweils einen unterschiedlichen Kristallisationsgrad oder unterschiedliche Durchlässigkeitskoeffizienten für Feuchtigkeit aufweisen.

Bei allen vorbeschriebenen Papieren und textilen Geweben, die für den Einsatz in einer Brennstoffzelle geeignet sind, erfolgte die Funktionalisierung beispielsweise eine wasserabweisende Beschichtung erst nach der Herstellung des Papiers bzw. des Gewebes.

Aus US 6,444,339 B1 ist ein Verfahren zur Herstellung eines aus Mikrofaser-Brennstoffzellen gestaltetes Textil bekannt, welches Fasern mit funktionellen Eigenschaften aufweist. In einer Ausgestaltung wird das elektrisch leitfähige Trägermaterial der Faser zunächst mit Katalysator beschichtet, und anschließend mit einem Polymerfaden belegt. Die so ausgestaltete funktionalisierte Faser wird anschließend in das Textil eingearbeitet.
Eine weitere Ausgestaltung sieht vor, dass das elektrisch leitfähige Trägermaterial der Faser zunächst mit einem Polymerfaden belegt wird, der selbst abschnittsweise mit einem Katalysator beschichtet ist. Auch die auf diese Weise ausgestaltete funktionalisierte Faser wird anschließend in das Textil eingearbeitet.

### Aufgabe und Lösung

Aufgabe der Erfindung ist es, ein Textil zur Verfügung zu stellen, welches einzeln als Gasdiffusionsschicht und/oder Katalysatorschicht und/oder Elektrodenschicht oder auch als eine kombinierte Struktur mit der Funktion einer Gasdiffusionsschicht, einer Katalysatorschicht und einer Elektrode in einer Brennstoffzelle eingesetzt werden kann, und welches eine gezielte, definierte Einstellung von Eigenschaften, wie beispielsweise die elektrische Leitfähigkeit oder katalytische Eigenschaften, innerhalb des Textils bzw. der Textilien ermöglicht.

Die Aufgabe der Erfindung wird gelöst durch eine Faser mit den Merkmalen des Hauptanspruchs sowie durch die Verwendung dieser Faser gemäß Nebenanspruch. Vorteilhafte Ausgestaltungen der Faser und der Verwendung finden sich in den jeweils rückbezogenen Unteransprüchen.

### Gegenstand der Erfindung

Die grundlegende Idee dieser Erfindung ist es, anstelle eines komplexen textilen Gewebes, welches zur Erlangung von funktionellen Eigenschaften nachträglich getränkt oder beschichtet wird, einzelne funktionalisierte Fasern vorzusehen, die vorteilhaft zu einem textilen Gewebe mit definierten Eigenschaften verarbeitet werden können.

Unter einem Textil ist ein Gewebe bzw. ein textiles Produkt zu verstehen, das mit unterschiedlichen Textilverarbeitungstechniken hergestellt sein kann, z. B. durch Weben, Stricken oder ähnliches.

Als funktionelle Eigenschaften sind im Rahmen dieser Erfindung insbesondere katalytische Eigenschaften, protonenleitende Eigenschaften, hydrophobe, d. h. Wasser abweisende Eigenschaften oder auch lyophobe, d. h. jegliche Flüssigkeit abweisende Eigenschaften und damit beispielsweise Methanol-resistente Eigenschaften zu verstehen.

Im Sinne dieser Erfindung ist eine Faser ein verhältnismäßig langes, dünnes, flexibles Gebilde aus natürlichem oder künstlichem Material, dessen Moleküle sich in Längsrichtung orientieren. Fasern können in der Regel nur minimale Druck-, dafür aber hohe Zugkräfte aufnehmen. Gemeinsam bilden mehrere Fasern größere Strukturen. Ein Faden entsteht aus der weitgehend parallelen Anordnung von Fasern.

Eine Faser zu funktionalisieren bedeutet, sie mit einem funktionalen Material zu beschichten oder zu belegen. Beschichten bzw. Belegen bedeutet dabei, eine partielle, punktuelle, abschnittsweise oder vollflächige Auftragung eines oder mehrerer Materialien auf ein Trägermaterial mit verschiedenen Verfahren, z. B. Sprühen, Tränken, Streichen, Wickeln, Metallisieren, Bedampfen oder ähnliches. Auf diese Weise lassen sich beispielsweise Fasern aus Kohlenstoff elektrochemisch, galvanisch oder über Metallbedampfung metallisieren, wodurch ein Katalysator direkt auf die Fäden aufgebracht wird. Ferner kann durch eine komplette oder teilweise Beschichtung einer Faser mit einem Ionomer die Eigenschaft der Protonenleitung sichergestellt werden. Zur Lyophobisierung bietet sich eine Belegung mit einem lyophoben Material, insbesondere einem Polymer auf Fluorcarbonbasis an.

Alternativ zu einer direkten Beschichtung des Trägermaterials mit dem funktionalen Material ist auch eine Ausgestaltung der Belegung möglich, bei der das funktionale Material in Form einer weiteren Faser um die Trägerfaser gewickelt oder geschlungen ist, oder das Trägermaterial in anderer Form in einer weiteren, das funktionale Material aufweisenden Faser eingebettet ist. Es entsteht in jedem Fall die erfindungsgemäße funktionalisierte Faser, die zumindest ein Trägermaterial aufweist sowie zusätzlich wenigstens ein funktionales Material aufweist.

Sowohl Kurzfasern als auch Langfasern können mit einer statistischen Verteilung zu lockeren Faserlagen, sogenannten Vliesen, verarbeitet werden. Ein funktionalisiertes Vlies würde dann im Sinne dieser Erfindung aus funktionalisierten Fasern bestehen. Im Folgenden wird die Erfindung anhand von funktionalisierten Fasern näher erläutert, wobei aber ausdrücklich sowohl funktionalisierte Fasern als auch funktionalisierte Fäden mit im Sinne der Erfindung umfasst sein sollen.

Bei der Herstellung eines erfindungsgemäßen Textils können die funktionalisierten Fasern vorteilhaft sehr genau und definiert eingearbeitet werden. Dies hat beispielsweise beim Einsatz in einer Brennstoffzelle den Vorteil, dass z. B. die Belegung mit Katalysator nicht nur quantitativ sehr genau erfolgen kann, sondern zudem auch die Lage des Katalysators und damit die Dreiphasenzone zwischen Protonenleiter (Ionomer), Elektronenleiter (Ruß) und Katalysator (Reaktionszone) exakt eingestellt werden kann. Insbesondere Gradienten sind so problemlos zu realisieren. Als mögliche Katalysatoren sind im Rahmen dieser Erfindung beispielsweise alle für den Einsatz in einer Niedertemperatur-Brennstoffzelle denkbaren Katalysatoren, insbesondere Platin-Ruthenium und Platin mit umfasst.

Zur Herstellung der Textilien aus den funktionalisierten Fasern sind geeignete Webe- und Strickverfahren zur Herstellung von 2- und 3-dimensionaler Geweben und Gestricken aus der Literatur bekannt. Bei der ebenfalls prinzipiell bekannten Herstellung von Vliesen ist ein funktionaler, schichtweiser oder gradueller Aufbau durch die funktionalisierten Fasern möglich.

Bei der Herstellung eines Textils umgeht man bei der Verwendung der erfindungsgemäßen funktionalisierten Fasern viele Probleme, die sich sonst bei der Fertigung ergeben können. Dies sind insbesondere die Einhaltung der Edelmetall-, Ionomer- und Teflonanteile und -auftragsmengen, die gleichmäßige Verteilung der Einzelkomponenten einer Katalystator- und/oder Microlayerdispersion, die Dicke der Schichten, die mechanische Stabilität, die Haftung, die Rissfestigkeit, die Rauhigkeit, die Oberflächenstruktur, das Penetrationsverhalten, die Oberflächenspannung und vieles mehr.

Beispielsweise entfällt vorteilhaft die sonst übliche Pastenherstellung, welches für eine nachträgliche Beschichtung des kompletten Gewebes notwendig wäre. Diese Pastenherstellung führt häufig zu agglomerierten Strukturen, und im Falle der Katalysatorpaste damit regelmäßig zu einer verminderten Katalysatorleistung.

Die Erfindung ermöglicht vorteilhaft die Verwendung einer Kombination von verschiedenen funktionalisierten Textilien oder die Vereinigung definierter Eigenschaften von verschiedenen Fasern in einem Textil. Insbesondere ermöglichen die funktionalisierten Fasern dieser Erfindung einen Einsatz als Gasdiffusionsschicht, als Gasdiffusionselektrode oder einfach als Elektrode in einer Brennstoffzelle.

### Spezieller Beschreibungsteil

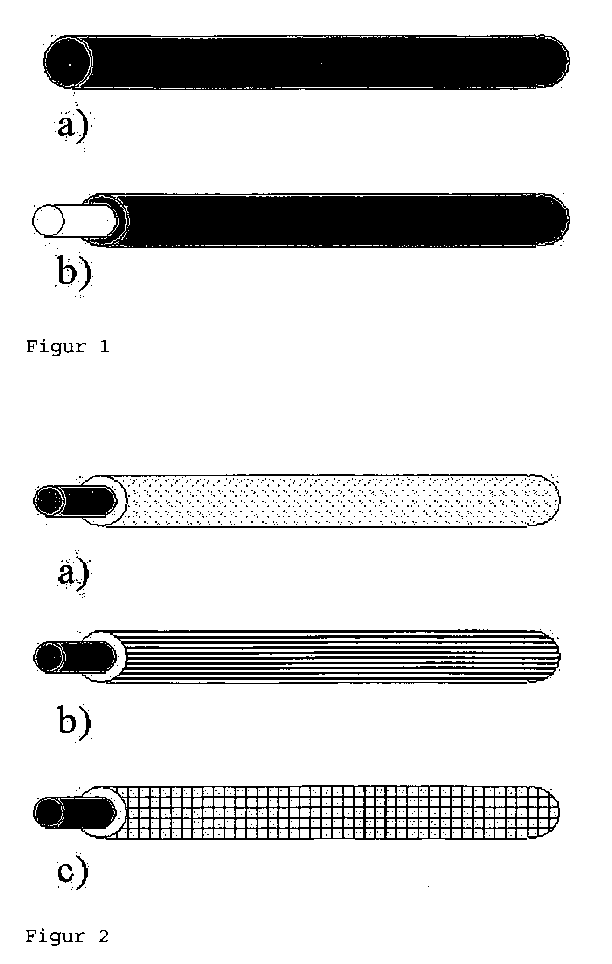

Nachfolgend wird der Gegenstand der Erfindung anhand von Figuren und Ausführungsbeispielen näher erläutert, ohne dass der Gegenstand der Erfindung dadurch beschränkt wird. Es zeigt die
- Figur 1:: elektrisch leitfähiges Trägermaterial (Trägerfaser) in Form
a) eines komplett elektrisch leitfähigen Fadens und
b) eines Fadens mit einer elektrisch leitfähigen Beschichtung.
- Figur 2:: Ausführungsformen der erfindungsgemäß funktionalisierten Faser mit einer Beschichtung des elektrisch leitfähigen Trägermaterials (Grundeinheit) aus:
a) Katalysator,
b) Polymer auf Fluorocarbon-Basis und
c) Ionomer.

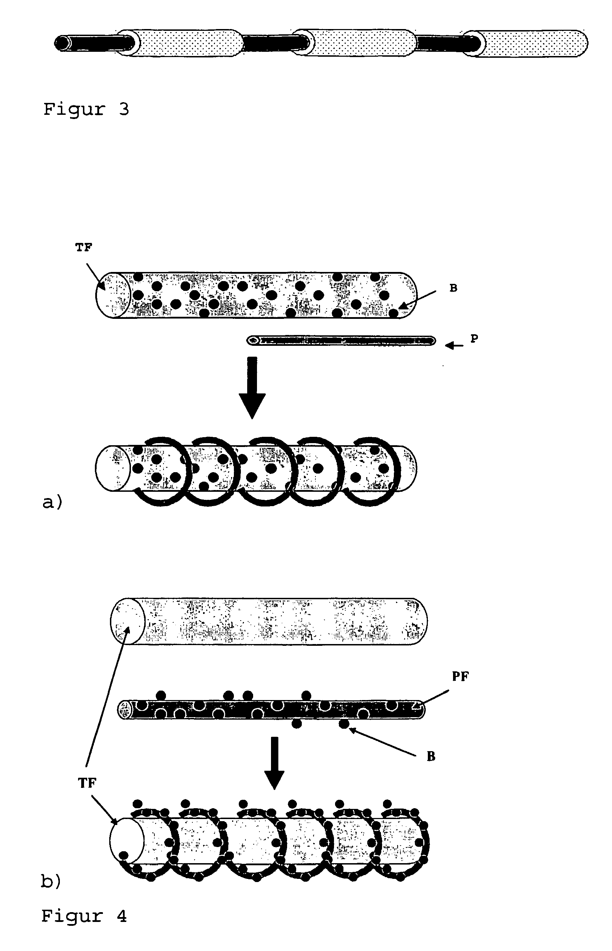

- Figur 3:: Ausführungsformen einer erfindungsgemäß funktionalisierten Faser mit einer abschnittsweisen Beschichtung.
- Figur 4:: Ausführungsformen einer erfindungsgemäß funktionalisierten Faser mit einer Belegung mit einer weiteren Faser wobei bei a) die Trägerfaser (TF) den Katalysator (B) aufweist, und diese mit einer Polymerfaser (PF) umwickelt ist, und bei b) die Trägerfaser (TF) mit einer Polymerfaser (PF) umwickelt ist, die ihrerseits den Katalysator (B) aufweist.

Ziel der Erfindung ist es, einzelne Fasern, als Grundeinheiten eines Textils gezielt zu modifizieren bzw. zu funktionalisieren, um daraus einzelnen Schichten oder gradierte Schichten mit definierten Eigenschaften herzustellen, und insbesondere daraus komplette Elektroden und/oder Diffusionsschichten und/oder Katalysatorschichten für Brennstoffzellen zu fertigen.

Die Vorteile des Einsatzes solcher funktionalisierten Fasern sind:
- die gezielte Einstellung von Eigenschaften und ein gezielter Strukturaufbau schon in der Diffusionsschicht und oder Gasdiffusionselektroden,
- eine verbesserte Versorgung der Elektroden und eine höhere Katalysatorausnutzung durch optimierte Dreiphasenzonen und
- einfache Fertigung der Brennstoffzelle, die relativ unempfindlich gegenüber verschiedenen Fertigungsparametern ist.

### Ausführungsformen am Beispiel einer Brennstoffzelle

### a) Trägermaterial

Für den Einsatz in einer Brennstoffzelle ist insbesondere die elektrische Leitfähigkeit der Katalysatorschicht entscheidend. Daher bietet es sich an, ein elektrisch leitfähiges Trägermaterial zur Herstellung der erfindungsgemäßen funktionalisierten Fäden zu verwenden. Dafür geeignete Trägermaterialien sind beispielsweise metallisierte Kunststofffäden oder auch schon von sich aus elektrisch leitende Fäden aus Metall, z. B. Platin, oder aus Kohlenstofffasern. Als Katalysatorbelegung bzw. -beschichtung kommen alle in einer Brennstoffzelle üblichen Katalysatoren in Frage, insbesondere Platin und Ruthenium.

Für die in einer Brennstoffzelle notwendige 3-Phasenzone ist es insbesondere notwendig, einen Protonenleiter zur Verfügung zu stellen, der die Protonen in geeigneter Weise von der Membran zur Katalysatorschicht, bzw. von dieser zur Membran transportiert. Dafür bietet sich die Funktionalisierung des Trägermaterials mit einem Ionomer an. Üblicherweise kommt dafür Nafion^{®} als ein dafür geeignetes Ionomer zum Einsatz.

### b) 3-Phasenzone

Die Dreiphasenzone kann somit zum Beispiel durch ein Gewebe aus mit Katalysator und mit Nafion^{®} beschichteten/belegten funktionalisierten Fasern hergestellt werden. Eine weitere Möglichkeit ist ein Gewebe, welches ausschließlich eine Sorte funktionalisierter Fasern umfasst. Diese könnten dann beispielsweise aus mit Katalysator beschichtetem Trägermaterial bestehen, welches zusätzlich eine Beschichtung bzw. eine Belegung mit Nafion^{®} aufweist. Die zusätzliche Belegung kann beispielsweise durch das Umwickeln der mit Katalysator beschichteten Faser mit einer zusätzlichen Nafion^{®} faser erfolgen oder auch durch das Einbetten der mit Katalysator beschichteten Faser in ein loses Gestrick von Nafion^{®} fasern.

### c) Diffusionsschicht

Auch eine Diffusionsschicht zur Verteilung der Betriebsmittel für die Brennstoffzelle kann durch die Verwendung der erfindungsgemäßen funktionalisierten Fasern sehr leicht realisiert werden. In einer Brennstoffzelle werden für die Zufuhr und Abfuhr von Betriebsmitteln in Form von Brennstoffen und Reaktionsprodukten in der Regel unterschiedliche Oberflächen auf den Substraten und in den Schichten benötigt. So erweist sich für die Zufuhr von Methanol eine hydrophile Struktur als vorteilhaft, während die Abfuhr von CO₂ besser mit einer lyophoben Struktur zu bewerkstelligen ist.

Bislang erfolgte eine derartige Lyophobisierung der Struktur üblicherweise durch Sprühen, Tränken oder Tauchen der gesamten Struktur in Form des kompletten Gewebes. Zur Lyophobisierung geeignete Materialien sind beispielsweise Polymere auf Fluorocarbon-Basis, wie z. B. Polytetrafluorethylen (PTFE) oder auch Tetrafluorethylen-Perfluorpropylen (FEP). Diese können insbesondere als Lösungen eingesetzt werden.

Erfindungsgemäß erfolgt eine Hydrophobisierung nun durch hydrophobe Fasern, bei denen das Trägermaterial beispielsweise in einer PTFE-Lösung getränkt wird. Durch entsprechende Web- und/oder Strickvorgänge, bei denen ein Textil dann aus diesen erfindungsgemäßen funktionalisierten Fasern hergestellt wird, lassen sich insbesondere leicht Lyophobisierungsgradienten einbauen.

Dazu erhalten beispielsweise die Fasern, die nahe an einer Katalysatorschicht liegen, andere Lyophobisierungsstärken als Fasern, die weiter von der Katalysatorschicht entfernt liegen. Oder der Anteil an lyophobisierten Fasern in dem Textil wird kontinuierlich in Richtung auf die Katalysatorschicht reduziert. Als Katalysatorschicht kommt sowohl eine herkömmlich herstellbare Schicht mit Katalysator, als auch eine Katalysatorschicht aus einem Textil, insbesondere einem Gewebe aus erfindungsgemäßen Fasern, in Betracht.

Durch spezielle oberflächenmodifizierte Fasern, die partiell oder komplett lyophob und damit insbesondere Methanolresistent hergestellt werden, können in Kombination mit hydrophilen Fasern beliebige 2- und 3-dimensionale Strukturen hergestellt werden, die exakt die geforderten hydrophilen und/oder hydrophoben Eigenschaften, insbesondere auch Gradienten aufweisen. Dadurch kann auf einfache Weise eine methanolresistente, gasdurchlässige Diffusionsschicht verwirklicht werden.

Neben der Verwendung komplett mit Katalysator oder mit Ionomer oder lyophob modifizierter Fasern ist auch eine partielle, bzw. abschnittsweise Beschichtung bzw. Belegung der Faser mit diesen Substanzen denkbar. Auf diese Weise ist möglich mit einer bzw. mehreren Fasertyp/en eine funktionalisierte Schicht mit definierten Eigenschaften herzustellen. Im Rahmen dieser Erfindung ist unter der Beschichtung bzw. Belegung des Trägermaterials sowohl die vollständige und/oder partielle Beschichtung als auch die Einbettung oder das Umschlingen einer weiteren Faser gemeint.

Durch den Einsatz der erfindungsgemäßen funktionalisierten Fasern kann beispielweise auf die Herstellung der Microlayer verzichtet werden. Die Anbindung der Katalysatorschicht zur Stromabnehmerschicht wird deutlich einfacher und die Übergangswiderstände werden reduziert. Der mechanische Zusammenhalt ist besser, da keine drei Schichten: Papier bzw. Gewebe, Microlayer und Katalysatorschicht benötigt werden. Es kann das Papier bzw. Gewebe mit der Microlayer ersetzt werden oder aber auch nur die Katalysatorschicht oder aber der gesamte Elektrodenaufbau durch die geeignete Kombination von funktionalisierten Fasern.

Eine vorteilhafte Ausführungsform der Erfindung sieht vor, eine komplette Elektrode aus funktionalisierten Fasern und deren Produkten in Form von Geweben, Gestricken oder ähnlichem herzustellen. Ausgehend von einer Trägerfaser werden an definierten Stellen die entsprechend funktionalisierten Fasern in das Textil durch geeignete textile Verfahren eingebaut. Damit kann das Textil zum einen mit lyophoben und hydrophilen Strukturen und gleichzeitig mit Ionomer behandelten Fäden kombiniert werden. Zusätzlich können beispielsweise auch noch mit Katalysator funktionalisierte Fäden eingebaut werden, so dass ein multifunktionales Textil entsteht, welches die geforderten Anforderungen an eine Brennstoffzellenelektrode und/oder Diffusionsschicht erfüllt.

In speziellen Fällen kann die funktionalisierte Faser auch alle drei geforderten Eigenschaften aufweisen, die durch die Art des Gewebes und den Anteil an funktionalisierten Fasern und dem Trägerfaden eingestellt werden können.

Die vielfältigen Webe- und Strickverfahren ermöglichen es auf einfache Weise vorteilhaft Funktionsschichten mit gut definierten Eigenschaften herzustellen. Zudem überwindet die Herstellung solcher funktionaler Schichten auf einfache Weise die sonst schwierig einzustellenden Fertigungsparameter, wie beispielsweise eine konstante oder definiert gradierte Katalysatorbelegung, Ionomerbelegung oder auch PTFE Belegung.

## Patentansprüche

1. Verfahren zur Herstellung eines Textils für eine Brennstoffzelle mit wenigstens einer Faser mit funktionellen Eigenschaften, wobei zunächst das elektrisch leitfähige Trägermaterial der Faser abschnittsweise mit Katalysator beschichtet wird, und anschließend mit einem Polymerfaden belegt wird, und die funktionalisierte Faser anschließend definiert in das Textil eingearbeitet wird.

2. Verfahren zur Herstellung eines Textils für eine Brennstoffzelle mit wenigstens einer Faser mit funktionellen Eigenschaften, wobei das elektrisch leitfähige Trägermaterial mit einem Polymerfaden belegt wird, der selbst abschnittsweise mit Katalysator beschichtet ist, und die funktionalisierte Faser anschließend definiert in das Textil eingearbeitet wird.

3. Textil für eine Brennstoffzelle herstellbar nach einem Verfahren gemäß einem der Ansprüche 1 oder 2, umfassend wenigstens eine Faser mit funktionellen Eigenschaften, die ein elektrisch leitfähiges Trägermaterial aufweist,
**dadurch gekennzeichnet,**
- **dass** die Faser abschnittsweise einen Katalysator und/oder ein Polymer auf Fluorocarbon-Basis und/oder ein Ionomer aufweist,
- und als Gasdiffusionschicht, als Gasdiffusionselektrode oder als Elektrode in der Brennstoffzelle eingesetzt werden kann.

4. Textil nach Anspruch 3, bei dem das Trägermaterial eine leitfähige Faser oder eine leitfähig beschichtete Faser umfasst.

5. Textil nach Anspruch 3 oder 4, bei der die leitfähig beschichtete Faser Baumwolle oder Kunststoff umfasst.

6. Textil nach Anspruch 3 oder 4, bei der das Trägermaterial Kohlenstoff umfasst.

7. Textil nach einem der Ansprüche 3 bis 6, mit Platin und/oder Ruthenium als Katalysator.

8. Textil nach einem der Ansprüche 3 bis 7, mit Polytetrafluorethylen (PTFE) oder Tetrafluorethylen-Perfluorpropylen (FEP) als Polymer auf Fuorocarbon-Basis.

9. Textil nach einem der Ansprüche 3 bis 8, mit einem sulfonierten Tetrafluorethylen-Polymer als Ionomer.

## Claims

1. Method for producing a textile for a fuel cell having at least one fibre with functional properties, first the electrically conductive carrier material of the fibre being coated in sections with catalyst and subsequently being covered with a polymer thread, and the functionalized fibre subsequently being incorporated into the textile in a defined way.

2. Method for producing a textile for a fuel cell having at least one fibre with functional properties, the electrically conductive carrier material being covered with a polymer thread which is itself coated in sections with catalyst, and the functionalized fibre subsequently being incorporated into the textile in a defined way.

3. Textile for a fuel cell, capable of being produced by a method according to either one of Claims 1 and 2, comprising at least one fibre with functional properties, which has an electrically conductive carrier material, **characterized in that**
- the fibre has in sections a catalyst and/or a fluorocarbon-based polymer and/or an ionomer,
- and can be used as a gas diffusion layer, as a gas diffusion electrode or as an electrode in the fuel cell.

4. Textile according to Claim 3, in which the carrier material comprises a conductive fibre or a conductively coated fibre.

5. Textile according to Claim 3 or 4, in which the conductively coated fibre comprises cotton or plastic.

6. Textile according to Claim 3 or 4, in which the carrier material comprises carbon.

7. Textile according to one of Claims 3 to 6, with platinum and/or ruthenium as a catalyst.

8. Textile according to one of Claims 3 to 7, with polytetrafluoroethylene (PTFE) or tetrafluoroethylene-perfluoropropylene (FEP) as a fluorocarbon-based polymer.

9. Textile according to one of Claims 3 to 8, with a sulphonated tetrafluoroethylene polymer as an ionomer.

## Revendications

1. Procédé de fabrication d'un textile pour une pile à combustible comprenant au moins une fibre ayant des caractéristiques fonctionnelles, le support électriquement conducteur de la fibre étant tout d'abord revêtu par couches d'un catalyseur et ensuite d'une fibre polymère et la fibre fonctionnalisée ensuite définie est incorporée dans le textile.

2. Procédé de fabrication d'un textile pour une pile à combustible comprenant au moins une fibre ayant des caractéristiques fonctionnelles, le support électriquement conducteur étant revêtu d'une fibre polymère elle-même revêtue d'un catalyseur, et la fibre fonctionnalisée ensuite définie est incorporée dans le textile.

3. Textile pour une pile à combustible, pouvant être fabriqué conformément à un procédé selon l'une quelconque des revendications 1 ou 2, comprenant au moins une fibre ayant des caractéristiques fonctionnelles, comportant un support électriquement conducteur,
**caractérisé en ce que**,
- la fibre présente des couches de catalyseur et/ou de polymère à base de fluorocarbone et/ou de ionomère,
- il peut être incorporé dans la pile à combustible en tant que couche de diffusion des gaz, en tant qu'électrode de diffusion des gaz ou en tant qu'électrode.

4. Textile selon la revendication 3, dans lequel le support comprend une fibre conductrice ou une fibre revêtue conductrice.

5. Textile selon la revendication 3 ou 4, dans lequel la fibre revêtue conductrice comprend du coton ou une matière plastique.

6. Textile selon la revendication 3 ou 4, dans lequel le support comprend du carbone.

7. Textile selon l'une quelconque des revendications 3 à 6, ayant du platine et/ou du ruthénium en tant que catalyseur.

8. Textile selon l'une quelconque des revendications 3 à 7, ayant du poly(tétrafluoroéthylène) (PTFE) ou du tétrafluoroéthylène-perfluoropropylène (FEP) en tant que polymère à base de fluorocarbone.

9. Textile selon l'une quelconque des revendications 3 à 8, ayant un polymère de tétrafluoroéthylène sulfoné en tant que ionomère.
